# EUROPEAN PATENT SPECIFICATION

(11) **EP 2 347 937 B1**
(45) Date of publication and mention of the grant of the patent: **25.07.2012**
(21) Application number: 10000686.5
(22) Date of filing: 25.01.2010
(51) Int. Cl.: B60R 21/207, B60R 21/233, B60R 21/231, B60N 2/427

(54) **Vehicle seat with a safety device**
Fahrzeugsitz mit einer Sicherheitsvorkehrung
Siège de véhicule avec dispositif de sécurité

(43) Date of publication of application: 27.07.2011
(73) Proprietor: Autoliv Development AB, 447 83 Vårgårda (SE)
(72) Inventor: Kock, Hans-Otto, 25368 Kiebitzreihe (DE); Gulde, Alexander, 85778 Haimhausen (DE); Eickhoff, Burkhard, 25462 Rellingen (DE)
(74) Representative: Müller Verweyen

(56) References cited:
- GB-A- 2 323 336
- GB-A- 2 332 884
- JP-A- 5 229 378
- JP-A- 2002 264 749
- US-A1- 2001 011 810

## Description

The invention relates to a vehicle seat with a safety device comprising the features of the preamble of claim 1. Such a seat is known from JP 5 229 378 A.

Vehicle seats in modern vehicles need to be designed with respect to several requirements of the car manufacturers. One requirement is a comfortable seat position especially in high class vehicles. Therefore the squab and the seatback of the seat have a special geometry adapted to the ergonomic needs of the occupant and are equipped additionally with cushions providing a comfortable soft sitting position for the occupant.

In case of an accident the occupant is exposed to a complex scenario of accelerations, which can result in disadvantageous movements and positions of the occupant regarding the safety in general and especially regarding forces acting on the occupant. One disadvantageous movement is the so-called submarining, where the occupant moves out of the seatbelt by diving with the pelvis under the pelvis belt. Because of this movement the seatbelt cannot restrain the occupant during the following crash-phase in an optimal manner.

To prevent this submarining movement it is known to arrange an airbag in the frontal part of the squab to lift the legs at an early stage of the crash.

According to recent investigations, it was shown that the occupant is displaced because of the accelerations at the beginning of the crash by a movement into the soft comfort layer provided by the cushions in the squab. This relative movement of the occupant to the vehicle structure causes an acceleration peak and a high load for the occupant when the movement is stopped by the seatbelt and/or rigid portions of the seat like the support structure.

The object of the invention is therefore to provide a vehicle seat with a safety device providing a restraint of the occupant with reduced forces acting on the occupant.

The invention proposes a vehicle seat comprising the features of claim 1. Further preferred embodiments are contained in the subclaims, the figures and the description.

The vehicle seat according to claim 1 comprises a seatback and a squab with an integrated airbag, wherein the squab comprises a recess in the sitting area adjoining to the seatback, in which the airbag is arranged, wherein the recess comprises a non extensible height in an essentially perpendicular direction to the sitting surface of the squab which is approximately equal to the height of the airbag in the inflated state, and an extensible width in an essentially parallel direction to the sitting surface.

Furthermore the recess is arranged in an area of the squab, where the occupant rests with the pelvis in normal sitting position. Because the maximum forces exerted by the occupant at the squab act in the area where the pelvis rests at the squab, the stiffening of the squab in this area is very effective with respect to the prevention of the movement of the occupant.

The basic idea of the invention is that the stiffness of the squab is increased by the inflated airbag in the sitting area adjoining to the seatback at an early stage of the crash. Because of the increased stiffness the above described movement of the occupant is at least reduced and the occupant is coupled closer to the accelerations of the vehicle. Because of the reduced movement the pelvis belt is abutting without or at least with less slack on the occupant, so that the occupant is coupled closer to the vehicle accelerations and the load caused by the stop of the movement is reduced. This improved coupling of the occupant results in an improved restraint characteristic in the following crash phase in general. Furthermore it is prevented that the occupant is moved upwards by the inflation of the airbag, because the recess comprises a non extensible height, which is approximately equal to the height of the airbag in the inflated state, but an extensible width parallel to the sitting surface. The inflation of the airbag due to the extensible width results in a compression of the comfort layer parallel to the sitting surface and not in a compression of the comfort layer perpendicular to the sitting surface. The non extensible height of the recess is defined by the height of the recess when the squab is not loaded.

Furthermore it is suggested that the recess is arranged in the comfort layer of the squab, and the comfort layer is compressed in a direction parallel to the sitting surface by the inflation of the airbag. By arranging the recess and the airbag in the comfort layer it is possible to stiffen the squab with a maximum effect, because the soft characteristic of the comfort layer is the original reason for the movement of the occupant at the early stage of the crash. The compression of the comfort layer parallel to the sitting surface enables a stiffening of the squab without or with a minimum of lifting the sitting surface.

Another preferred embodiment of the invention can be seen in that at least two recesses are provided in the squab with airbags arranged therein, wherein the recesses have an identical height. By using two recesses with an identical height it is possible to increase the compression of the comfort layer, without risking a higher compression in perpendicular direction of the sitting surface and an upward movement of the sitting surface.

The identical effect can be achieved by at least two recesses with therein arranged airbags in the squab, having an essentially parallel lateral extension parallel to the sitting surface. By using two airbags with a parallel lateral extension it is possible to compress the comfort layer homogeneously, which results also in a homogeneous stiffness.

Furthermore it is suggested that the airbag is designed at least in sections in a tubular shape. Because of the tubular shape it is possible to arrange the airbag also in flat parts of the squab without limiting the comfort layer to a size, which would result in a less comfortable sitting. Another advantage is that the tubular airbag enables a stiffening of a bigger surface of the squab with only one airbag. The airbag can be arranged in a special course to create a special distribution of the increased stiffness adapted to the occupant and to cover a predetermined surface.

In this case the tube should have a diameter of 30 to 50 mm, preferably 40 mm. In various testing it has been found out that these dimensions allow a reasonable compression of the comfort layer with a minimum risk of lifting the occupant.

One preferred arrangement of the airbag can be realised by an arrangement, which is designed at least in sections in a meander shape. The suggested meander shape enables a homogeneous stiffening of a big surface of the comfort layer with only one airbag.

Alternatively the airbag can be arranged at least in sections in a spiral shape, with the same effect.

Another preferred embodiment can be seen in that at least two airbags are provided in the squab, which are arranged in a plane, which is oriented essentially parallel to the sitting surface of the squab. By the suggested arrangement of the airbags it is possible to compress the comfort layer in an essentially parallel direction to the sitting surface with a minimum of compression perpendicular to the sitting surface.

Another preferred arrangement of the airbag can be realised by arranging the airbag in an area of the squab supporting one or both legs of the occupant in the normal sitting position.

Furthermore it is suggested, that the airbag is inflatable in a reversible manner. The improved vehicle seat with the safety device can therefore also be activated in a pre-crash phase. The occupant can be warned by the inflated airbag and the squab is already stiffened at the beginning of a possible following crash.

To get a reasonable stiffening of the squab and support of the occupant it has been shown that the airbag should be inflated with a pressure of 4-7 bar, preferably 6 bar.

Moreover it is suggested that the airbag is arranged in a flexible housing. The housing protects the airbag and can be used additionally to fasten the airbag in the recess.

Another preferred embodiment can be seen in that the airbag is connectable with a centralised pneumatic system in the vehicle. By using a centralised pneumatic system for filling the airbag there is no extra inflator needed which must be arranged at the seat. This is especially reasonable because of the limited available space in the seat.

The invention is described by several preferred embodiments, wherein it is shown in the figures in detail:
- Fig. 1:: Vehicle seat;
- Fig.2:: Vehicle seat with integrated airbags in view from the front;
- Fig.3:: Vehicle seat with three tubular airbags;
- Fig.4:: Vehicle seat with an airbag in meander shape;
- Fig. 5a-5c:: Recess with airbag in different situations.

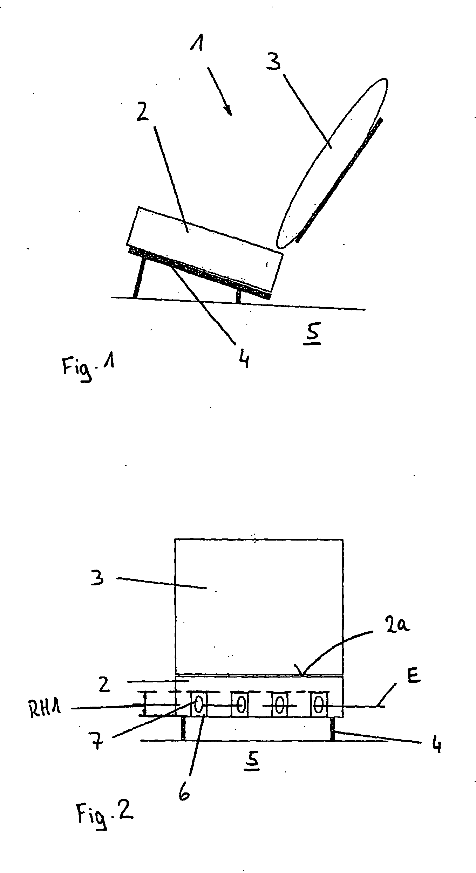

In fig. 1 it is shown a vehicle seat 1 comprising a seatback 3 and a squab 2. Both parts are supported by a rigid supporting structure 4, which is also used for fastening the vehicle seat 1 at the vehicle structure 5.

In fig. 2 the identical vehicle seat 1 is shown in view from the front, wherein the squab 2 is provided with several recesses 6 and airbags 7 arranged therein. The airbags 7 have identical dimensions and are arranged in recesses 6 having an identical height RH1, so that the airbags 7 are defining a plane E, which is parallel to the sitting surface 2a of the squab 2. The recesses 6 with the airbags 7 are arranged in the comfort layer of the squab 2, so that the comfort layer of the squab 2 is compressed, when the airbags 7 are inflated by widening the recesses 6. Because of the uniform design and arrangement of the airbags 7 and the recesses 6 the compression of the comfort layer comprises also a uniform distribution at least in the shown crosscutting view through the squab 2.

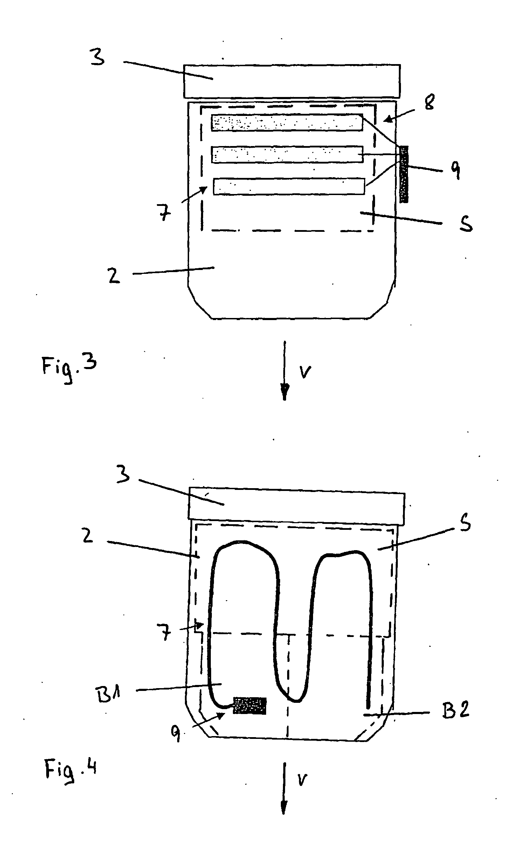

In fig. 3 it is shown an alternative embodiment with three tubular airbags 7 in a parallel arrangement perpendicular to the driving direction V, which are connected via a manifold 8 with a common inflator 9. The airbags 7 are arranged in an area S adjoining to the seatback 3, where the occupant rests in normal sitting position with the pelvis. The area S is loaded in the crash with a maximum force, so that the occupant is performing a movement moving into the comfort layer of the squab 2 of vehicle seat 1 in the prior art. To prevent this effect the squab 2 is provided with the airbags 7, which are inflated at an early stage of the crash, so that the stiffness of the squab 2 is increased in the area S of the squab 2 and the movement of the occupant into the squab is reduced. Because of the reduced movement of the occupant the pelvis belt is abutting with less slack on the occupant and the acceleration peak when stopping the movement is also reduced. In total it can be stated that the occupant is coupled closer to the vehicle accelerations and the load acting on the occupant is thereby reduced.

In fig.4 it is shown an alternative embodiment, where the airbag 7 is arranged in a meander shape. The meander shape enables an equal increase of the stiffness of the whole squab 2 or big sections of the squab 2 with only one airbag 7. Furthermore it is possible to stiffen the area S as well as the areas B1 and B2 where the occupant abuts with his legs. The course of the airbag 7 in areas B1 and B2 is adapted to the position of the abutting legs of the occupant in the normal sitting position and approximately parallel to the driving direction V.

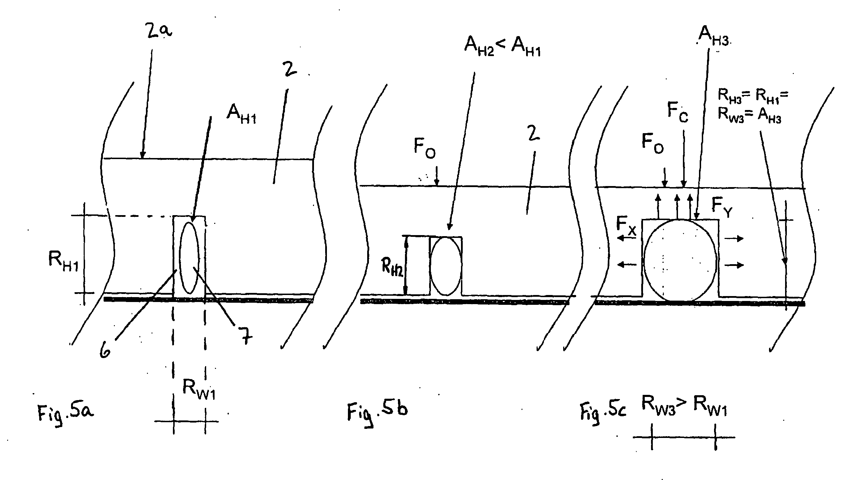

In the figures 5a-5c it is shown an airbag 7 arranged in a recess in different situations. In fig.5a it is shown a cut through the squab 2, wherein the airbag 7 is not inflated and no occupant sits on the sitting surface 2a of the squab 2. The recess 6 comprises a height RH1 and a width RW1 and contains the airbag 7 with a height AH1. When the occupant sits in the vehicle seat 1, which status is shown in fig.5b, a force F0 acts on the sitting surface 2a and compresses the comfort layer of the squab 2 and reduces the height of the recess 6 to a height RH2 and the height of the airbag 7 to a height AH2. When a crash or a pre-crash phase is detected by a not shown sensor system the airbag 7 is inflated, which status is shown in fig. 5c. The volume of the airbag 7 is increased, so that the height of the recess 6 is raised to a height RH3 which is equal to the height RH1 of the recess 6 in the unloaded status in fig.5a prior to the inflation of the airbag 7. The width of the recess 6 is extended to a width RW3. The important effect realised by the invention is that the recess 6 is extended in the direction parallel to the sitting surface 2a from the width RW1 in fig. 5a to the width RW3, while the extension in the direction perpendicular to the sitting surface 2a is limited to the height RH1=RH3 of the recess 6 in the unloaded status. The additional force FC created by the occupant because of the accelerations during the crash is compensated by the compression force FY created by the inflation of the airbag 7 and the comfort layer with the higher stiffness in general, so that the movement of the occupant into the squab is at least reduced.

## Claims

1. Vehicle seat (1) with a safety device having a seatback (3) and a squab (2) with an integrated airbag (7), the squab (2) comprising a recess (6) in the sitting area (S) adjoining to the seatback, in which the airbag (7) is arranged, wherein the recess (6) comprises a non extensible height (RH1) in an essentially perpendicular direction to the sitting surface (2a) of the squab (2) which is approximately equal to the height (AH3) of the airbag (7) in the inflated state, and an extensible width (RW) in an essentially parallel direction to the sitting surface (2a), **characterised in that** the recess (6) is arranged in an area of the squab (2), where the occupant rests with the pelvis in normal sitting position.

2. Vehicle seat (1) according to claim 1, **characterised in, that** the recess (6) is arranged in the comfort layer of the squab (2), and the comfort layer is compressed in a direction parallel to the sitting surface (2a) by the inflation of the airbag (7).

3. Vehicle seat (1) according to one of the preceding claims, **characterised in, that** at least two recesses (6) are provided in the squab (2) with therein arranged airbags (7), wherein the recesses (6) have an identical height (RH1).

4. Vehicle seat (1) according to one of the preceding claims, **characterised in, that** at least two recesses (6) with therein arranged airbags (7) are provided in the squab (2), which have an essentially parallel lateral extension parallel to the sitting surface (2a).

5. Vehicle seat (1) according to one of the preceding claims, **characterised in, that** the airbag (7) is designed at least in sections in a tubular shape.

6. Vehicle seat (1) according to claim 5, **characterised in, that** the tube has a diameter of 30 to 50 mm, preferably 40 mm.

7. Vehicle seat (1) according to claim 4 or 5, **characterised in, that** the airbag (7) is arranged at least in sections in a meander shape.

8. Vehicle seat (1) according to claim 4 or 5, **characterised in, that** the airbag (7) is arranged at least in sections in a spiral shape.

9. Vehicle seat (1) according to one of the preceding claims, **characterised in, that** at least two airbags (7) are provided in the squab (2), which are arranged in a plane (E), which is oriented essentially parallel to the sitting surface (2a) of the squab (2).

10. Vehicle seat (1) according to one of the preceding claims, **characterised in, that** the airbag (7) is arranged in an area of the squab (2) supporting one or both legs of the occupant in the normal sitting position.

11. Vehicle seat (1) according to one of the preceding claims, **characterised in, that** the airbag (7) is inflatable in a reversible manner.

12. Vehicle seat (1) according to one of the preceding claims, **characterised in, that** the airbag (7) is inflated with a pressure of 4-7 bar, preferably 6 bar.

13. Vehicle seat (1) according to one of the preceding claims, **characterised in, that** the airbag (7) is arranged in a flexible housing.

14. Vehicle seat (1) according to one of the preceding claims, **characterised in, that** the airbag (7) is connectable with a centralised pneumatic system in the vehicle.

## Patentansprüche

1. Fahrzeugsitz (1) mit einer Sicherheitsvorrichtung mit einer Sitzlehne (3) und einem Sitzpolster (2) mit einem integrierten Airbag (7), wobei das Sitzpolster (2) in dem sich an die Sitzlehne anschließenden Sitzbereich (S) eine Aussparung (6) aufweist, in welcher der Airbag (7) angeordnet ist, wobei die Aussparung (6) eine in einer zu der Sitzfläche (2a) des Sitzpolsters (2) im Wesentlichen senkrechten Richtung nicht erweiterbare Höhe (RH1) aufweist, welche ungefähr der Höhe (AH3) des Airbags (7) im aufgeblasenen Zustand entspricht, und eine in einer zu der Sitzfläche (2a) im Wesentlichen parallelen Richtung erweiterbare Breite (RW) aufweist, **dadurch gekennzeichnet, dass** die Aussparung (6) in einem Bereich des Sitzpolsters (2) angeordnet ist, auf welchem der Insasse in der normalen Sitzposition mit dem Becken aufsitzt.

2. Fahrzeugsitz (1) nach Anspruch 1, **dadurch gekennzeichnet, dass** die Aussparung (6) in der Komfortschicht des Sitzpolsters (2) angeordnet ist, und dass die Komfortschicht durch das Aufblasen des Airbags (7) in einer Richtung parallel zu der Sitzfläche (2a) zusammengedrückt wird.

3. Fahrzeugsitz (1) nach einem der vorangegangenen Ansprüche, **dadurch gekennzeichnet, dass** mindestens zwei Aussparungen (6) mit darin angeordneten Airbags (7) in dem Sitzpolster (2) vorgesehen sind, wobei die Aussparungen (6) eine identische Höhe (RH1) aufweisen.

4. Fahrzeugsitz (1) nach einem der vorangegangenen Ansprüche, **dadurch gekennzeichnet, dass** mindestens zwei Aussparungen (6) mit darin angeordneten Airbags (7) in dem Sitzpolster (2) vorgesehen sind, welche eine im Wesentlichen parallele seitliche Ausdehnung parallel zu der Sitzfläche (2a) aufweisen.

5. Fahrzeugsitz (1) nach einem der vorangegangenen Ansprüche, **dadurch gekennzeichnet, dass** der Airbag (7) zumindest abschnittsweise schlauchförmig ausgebildet ist.

6. Fahrzeugsitz (1) nach Anspruch 5, **dadurch gekennzeichnet, dass** der Schlauch einen Durchmesser von 30 bis 50 mm, vorzugsweise 40 mm aufweist.

7. Fahrzeugsitz (1) nach Anspruch 4 oder 5, **dadurch gekennzeichnet, dass** der Airbag (7) zumindest abschnittsweise mäanderförmig angeordnet ist.

8. Fahrzeugsitz (1) nach Anspruch 4 oder 5, **dadurch gekennzeichnet, dass** der Airbag (7) zumindest abschnittsweise spiralförmig angeordnet ist.

9. Fahrzeugsitz (1) nach einem der vorangegangenen Ansprüche, **dadurch gekennzeichnet, dass** mindestens zwei Airbags (7) in dem Sitzpolster (2) vorgesehen sind, welche in einer im Wesentlichen parallel zu der Sitzfläche (2a) des Sitzpolsters (2) ausgerichteten Ebene (E) angeordnet sind.

10. Fahrzeugsitz (1) nach einem der vorangegangenen Ansprüche, **dadurch gekennzeichnet, dass** der Airbag (7) in einem Bereich des Sitzpolsters (2) angeordnet ist, welcher ein Bein oder beide Beine des Insassen in der normalen Sitzposition unterstützt.

11. Fahrzeugsitz (1) nach einem der vorangegangenen Ansprüche, **dadurch gekennzeichnet, dass** der Airbag (7) reversibel aufblasbar ist.

12. Fahrzeugsitz (1) nach einem der vorangegangenen Ansprüche, **dadurch gekennzeichnet, dass** der Airbag (7) mit einem Druck von 4 bis 7 bar, vorzugsweise 6 bar aufgeblasen wird.

13. Fahrzeugsitz (1) nach einem der vorangegangenen Ansprüche, **dadurch gekennzeichnet, dass** der Airbag (7) in einem dehnbaren Gehäuse angeordnet ist.

14. Fahrzeugsitz (1) nach einem der vorangegangenen Ansprüche, **dadurch gekennzeichnet, dass** der Airbag (7) an ein zentrales pneumatisches System in dem Fahrzeug angeschlossen werden kann.

## Revendications

1. Siège de véhicule (1) avec dispositif de sécurité ayant un dossier (3) et un coussin (2) doté d'un airbag intégré (7), le coussin (2) comprenant un évidement (6) dans la zone d'assise (S) adjacente au dossier, où est disposé l'airbag (7), dans lequel l'évidement (6) comprend une hauteur non extensible (RH1) dans une direction essentiellement perpendiculaire à la surface d'assise (2a) du coussin (2) qui est approximativement égale à la hauteur (AH3) de l'airbag (7) à l'état gonflé, et une largeur extensible (RW) dans une direction essentiellement parallèle à la surface d'assise (2a), **caractérisé par le fait que** l'évidement (6) est disposé dans une zone du coussin (2), où l'occupant se pose avec le pelvis en position assise normale.

2. Siège de véhicule (1) selon la revendication 1, **caractérisé par le fait que** l'évidement (6) est disposé dans la couche de confort du coussin (2), et la couche de confort est comprimée dans une direction parallèle à la surface d'assise (2a) par le gonflage de l'airbag (7).

3. Siège de véhicule (1) selon l'une des revendications précédentes, **caractérisé par le fait qu'**au moins deux évidements (6) où sont disposés les airbags (7) sont fournis dans le coussin (2), dans lequel les évidements (6) ont une hauteur identique (RH1).

4. Siège de véhicule (1) selon l'une des revendications précédentes, **caractérisé par le fait qu'**au moins deux évidements (6) où sont disposés les airbags (7) sont fournis dans le coussin (2), qui ont une extension latérale essentiellement parallèle, parallèle à la surface d'assise (2a).

5. Siège de véhicule (1) selon l'une des revendications précédentes, **caractérisé par le fait que** l'airbag (7) est conçu au moins en sections en forme tubulaire.

6. Siège de véhicule (1) selon la revendication 5, **caractérisé par le fait que** le tube a un diamètre de 30 à 50 mm, préférentiellement 40 mm.

7. Siège de véhicule (1) selon la revendication 4 ou 5, **caractérisé par le fait que** l'airbag (7) est disposé au moins en sections en forme de méandre.

8. Siège de véhicule (1) selon la revendication 4 ou 5, **caractérisé par le fait que** l'airbag (7) est disposé au moins en sections en forme de spirale.

9. Siège de véhicule (1) selon l'une des revendications précédentes, **caractérisé par le fait qu'**au moins deux airbags (7) sont fournis dans le coussin (2), qui sont disposés dans un plan (E), qui est orienté essentiellement parallèlement à la surface d'assise (2a) du coussin (2).

10. Siège de véhicule (1) selon l'une des revendications précédentes, **caractérisé par le fait que** l'airbag (7) est disposé dans une zone du coussin (2) supportant une ou les deux jambes de l'occupant en position assise normale.

11. Siège de véhicule (1) selon l'une des revendications précédentes, **caractérisé par le fait que** l'airbag (7) peut être gonflé de manière réversible.

12. Siège de véhicule (1) selon l'une des revendications précédentes, **caractérisé par le fait que** l'airbag (7) est gonflé avec une pression de 4 à 7 bars, préférentiellement 6 bars.

13. Siège de véhicule (1) selon l'une des revendications précédentes, **caractérisé par le fait que** l'airbag (7) est disposé dans un boîtier souple.

14. Siège de véhicule (1) selon l'une des revendications précédentes, **caractérisé par le fait que** l'airbag (7) peut être relié avec un système pneumatique centralisé dans le véhicule.
